# EUROPÄISCHE PATENTANMELDUNG

(11) **EP 3 667 597 A1**
(43) Veröffentlichungstag der Anmeldung: **17.06.2020**
(21) Anmeldenummer: 18212265.5
(22) Anmeldetag: 13.12.2018
(51) Int. Cl.: G06Q 30/00

(54) **VERFAHREN ZUM BESTIMMEN EINER IDENTITÄT EINES PRODUKTS DURCH ERFASSUNG EINES OPTISCH SICHTBAREN UND EINES NICHT SICHTBAREN MERKMALS, SOWIE IDENTIFIZIERUNGSSYSTEM**

(71) Anmelder: Siemens Aktiengesellschaft, 80333 München (DE)
(72) Erfinder: Bischoff, Martin, 85653 Aying, Großhelfendorf (DE); Dolansky, Stefan, 90518 Altdorf (DE); Mayer, Hermann Georg, 83209 Prien am Chiemsee (DE); Mose, Christian, 83026 Rosenheim (DE)

(57) **Zusammenfassung**

Verfahren zum Bestimmen einer Identität eines Produkts (6) mittels eines Identifizierungssystems (1), bei welchem mittels einer Erfassungseinrichtung (2) ein optisch sichtbares Merkmal (7) des Produkts (6) erfasst wird und das erfasste optisch sichtbare Merkmal (7) mit einem in einer Datenbank (5) abgespeicherten optisch sichtbaren Referenzmerkmal (8) des Produkts (6) in einem ersten Vergleich mittels einer elektronischen Recheneinrichtung (3) verglichen wird und in Abhängigkeit des ersten Vergleichs die Identität des Produkts (6) bestimmt wird, wobei mittels der Erfassungseinrichtung (2) ein weiteres optisch nichtsichtbares Merkmal (9) des Produkts (6) erfasst wird und mit einem in der Datenbank (5) abgespeicherten optisch nichtsichtbaren Referenzmerkmal (10) des Produkts (6) in einem zweiten Vergleich verglichen wird und in Abhängigkeit des ersten Vergleichs und des zweiten Vergleichs die Identität des Produkts (6) mittels der elektronischen Recheneinrichtung (3) bestimmt wird, sowie ein Identifizierungssystem (1).

## Beschreibung

Die Erfindung betrifft ein Verfahren zum Bestimmen einer Identität eines Produkts mittels eines Identifizierungssystems. Bei dem Verfahren wird mittels einer Erfassungseinrichtung des Identifizierungssystems ein optisch sichtbares Merkmal des Produkts erfasst und das erfasste optisch sichtbare Merkmal wird mit einem in einer Datenbank des Identifizierungssystems abgespeicherten optisch sichtbaren Referenzmerkmal des Produkts in einem ersten Vergleich mittels einer elektronischen Recheneinrichtung des Identifizierungssystems verglichen und in Abhängigkeit des ersten Vergleichs wird die Identität des Produkts bestimmt. Ferner betrifft die Erfindung ein Identifizierungssystem.

Ein Produkt, zum Beispiel ein Agrar- oder Industrieerzeugnis, ist durch bestimmte Merkmale eindeutig bestimmbar. Wenn das Produkt in den Umlauf gebracht wird, sind damit in der Regel bestimmte Rechte und Pflichten verbunden. Rechte können durch Garantiebestimmungen entstehen, die bestimmte Merkmale des Produkts zusichern. Beispielsweise kann hier die Haltbarkeit, der Funktionsumfang, die Produktion gemäß bestimmter Standards, wie zum Beispiel Biolandwirtschaft, oder das Verwenden bestimmter Materialien betrachtet werden. Pflichten können beispielsweise Lizenzbestimmungen sein.

Zur Identifizierung des Produkts wurde das Problem beispielsweise durch das Aufbringen zusätzlich offenbar sichtbarer Merkmale gelöst. Üblicherweise umfasst dies das Anbringen einer Seriennummer, eines Produktionsstempels oder dergleichen. Diese können jedoch leicht verloren gehen oder auch gefälscht werden. Problematisch ist dies insbesondere bei Produkten, deren Merkmale mit dem individuellen Einzelprodukt verbunden sind, von dem gleichartige Kopien existieren. Ein Beispiel dafür wäre ein Garantieanspruch mit einem 3D-gedruckten Fahrzeugteil. Wird das Teil beschädigt und durch den Betreiber durch eine Kopie ersetzt, so könnte dieser durch das Übertragen der Seriennummer des beschädigten Teils auf das neu gedruckte Teil die Ansprüche der Garantie beliebig oft verlängern.

Aufgabe der vorliegenden Erfindung ist es, ein Verfahren sowie ein Identifizierungssystem zu schaffen, mittels welchem eine Identität eines Produkts zuverlässig bestimmt werden kann.

Diese Aufgabe wird durch ein Verfahren sowie durch ein Identifizierungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Identität eines Produkts mittels eines Identifizierungssystems. Bei dem Verfahren wird mittels einer Erfassungseinrichtung des Identifizierungssystems ein optisch sichtbares Merkmal des Produkts erfasst. Es wird das erfasste optisch sichtbare Merkmal mit einem in einer Datenbank des Identifizierungssystems abgespeicherten optisch sichtbaren Referenzmerkmal des Produkts in einem ersten Vergleich mittels einer elektronischen Recheneinrichtung des Identifizierungssystems verglichen und in Abhängigkeit des ersten Vergleichs wird die Identität des Produkts bestimmt.

Es ist vorgesehen, dass mittels der Erfassungseinrichtung ein weiteres optisch nicht sichtbares Merkmal des Produkts erfasst wird und mit einem in der Datenbank des Identifizierungssystems abgespeicherten optisch nicht sichtbaren Referenzmerkmal des Produkts in einem zweiten Vergleich verglichen wird und in Abhängigkeit des ersten Vergleichs und des zweiten Vergleichs wird die Identität des Produkts mittels der elektronischen Recheneinrichtung bestimmt.

Dadurch ist es ermöglicht, dass zuverlässig die Identität des Produkts bestimmt werden kann. Insbesondere ist das nicht sichtbare Merkmal somit fälschungssicher, sodass eindeutig die Identität des Produkts bestimmt werden kann.

Unter optisch sichtbar ist insbesondere zu verstehen, dass mittels des menschlichen Auges das optisch sichtbare Merkmal erfassbar ist. Unter optisch nicht sichtbar ist insbesondere zu verstehen, dass mittels des menschlichen Auges das optisch nicht sichtbare Merkmal nicht erfassbar ist. Mit anderen Worten kann das optisch sichtbare Merkmal vom Menschen auch ohne eine Erfassungseinrichtung erfasst werden, während das optisch nicht sichtbare Merkmal nur mittels der Erfassungseinrichtung erfassbar ist. Insbesondere ist ebenfalls unter optisch nicht sichtbarem Merkmal zu verstehen, dass ein Mensch dieses Merkmal als Merkmal überhaupt nicht erkennen kann. Es kann sich somit bei dem optisch nicht sichtbaren Merkmal handeln um ein verstecktes Merkmal.

Mit anderen Worten wird vorgeschlagen, dass ein verborgenes Merkmal, dem nicht sichtbaren Merkmal des Produkts, mit einem sichtbaren Merkmal verbunden wird. Dadurch kann sowohl der Hersteller als auch beispielsweise ein Endkunde die Authentizität des Produkts beziehungsweise die Echtheit und die Identität des Produkts nachweisen. Für beispielsweise Endkunden ist keine Fälschung des Nachweises mehr möglich. Wird beispielsweise die Datenbank außerhalb des Zugriffs des Herstellers verwahrt, zum Beispiel zusätzlich codiert in einer Blockkette, einer sogenannten Blockchain, so kann dieser ebenfalls im Nachhinein den Nachweis nicht mehr fälschen.

Bevorzugt ist vorgesehen, dass bei einer Übereinstimmung des erfassten optisch sichtbaren Merkmals mit dem optisch sichtbaren Referenzmerkmal als erster Vergleich und bei einer Übereinstimmung des erfassten optisch nicht sichtbaren Merkmals mit dem optisch nicht sichtbaren Referenzmerkmal als zweiter Vergleich die Identität des Produkts bestimmt wird. Mit anderen Worten ist vorgesehen, dass durch das erfindungsgemäße Verfahren solche Merkmale zum Nachweis bestimmter Rechte oder Eigenschaften herangezogen werden, die insbesondere unveränderlich mit dem Produkt verbunden sind und nicht, beziehungsweise nur unter relativ großem Aufwand, kopiert werden können. Insbesondere handelt es sich bei dem nicht sichtbaren Merkmal um ein einzigartiges nicht sichtbares Merkmal.

Zum Verwalten des Produktionsprozesses kann beispielsweise ein Verfahren herangezogen werden, welches mehrere Schritte aufweisen kann.

In einem ersten Schritt erfolgt ein, insbesondere verschlüsseltes, Speichern von Herstellungsdaten, auf deren Basis das Bauelement durch den Produktionsprozess herstellbar ist, wie beispielsweise zumindest ein Teil einer Bauanleitung, in einem ersten Dateicontainer. Zum Speichern beziehungsweise für die Speicherung empfängt beispielsweise eine erste elektronische Recheneinrichtung die Herstellungsdaten und schreibt sie in einen Speicherbereich beispielsweise einer Speichereinrichtung. Es können die Herstellungsdaten beispielsweise durch die elektronische Recheneinrichtung in der Speichereinrichtung abgelegt werden. Dabei kann die Recheneinrichtung beispielsweise erste Daten empfangen, aus denen die Herstellungsdaten resultieren beziehungsweise gebildet werden können. Dies bedeutet, dass die ersten Daten die Herstellungsdaten sein können oder die Herstellungsdaten aus den, insbesondere empfangenen, ersten Daten erzeugt beziehungsweise erstellt werden können. Der Dateicontainer kann als virtueller Dateicontainer beispielsweise als Speicherbereich auf einer Speichereinrichtung interpretiert werden, innerhalb welcher beispielsweise die Herstellungsdaten abgelegt werden können, wobei die Herstellungsdaten selbst unterschiedlichste Daten beziehungsweise Dateiformate oder Informationen enthalten können, wie beispielsweise technische Zeichnungen und/oder CAD-Modelle.

In einem zweiten Schritt des Verfahrens zum Verwalten erfolgt ein, insbesondere verschlüsseltes, Speichern von sich auf das Bauelement beziehenden Reproduktionsdaten in dem ersten Dateicontainer, wobei die Reproduktionsdaten wenigstens eine sich auf das Herstellen des Bauelements beziehende Erlaubnis charakterisieren. Dazu kann die Recheneinrichtung zweite Daten empfangen, aus denen die Reproduktionsdaten resultieren können. Dies bedeutet, dass die zweiten Daten die Reproduktionsdaten oder die Reproduktionsdaten können aus den zweiten Daten erstellt beziehungsweise erzeugt werden. Die Reproduktionsdaten umfassen insbesondere beispielsweise Lizenzbestimmungen beziehungsweise eine Lizenz, welche beispielsweise besagt was mit den Herstellungsdaten erlaubt ist beziehungsweise wie diese verwendet werden können beziehungsweise dürfen. So können die Reproduktionsdaten beispielsweise beinhalten wer, wie oft und beispielsweise mit welcher Präzision, wo das Bauelement, insbesondere durch die Produktionsmaschine, erzeugen darf. Ferner können die Reproduktionsdaten beispielsweise auch eine zeitliche Beschränkung der Lizenz umfassen und/oder es kann in den Reproduktionsdaten beispielsweise vermerkt sein, dass eine Erlaubnis für die Verwendung der Herstellungsdaten generell oder eben beschränkt erteilt wird.

In einem dritten Schritt des Verfahrens zum Verwalten erfolgt ein, insbesondere verschlüsseltes, Speichern von Produktionsdaten, welche wenigstens einen Zustand der wenigstens einen Produktionsmaschine während des Produktionsprozesses charakterisieren, in einem zweiten Dateicontainer. Der zweite Dateicontainer ist insbesondere analog des ersten Dateicontainers ausgebildet und kann beispielsweise auf der ersten Speichereinrichtung der elektronischen Recheneinrichtung oder aber auch beziehungsweise zusätzlich auf einer weiteren Speichereinrichtung einer weiteren Recheneinrichtung gespeichert beziehungsweise abgelegt sein. Dabei empfängt die Recheneinrichtung oder die weitere Recheneinrichtung beispielsweise dritte Daten, aus denen die Produktionsdaten resultieren beziehungsweise abgeleitet beziehungsweise erzeugt werden können. Dies bedeutet, analog zu den ersten und den zweiten Daten, dass die dritten Daten die Produktionsdaten sein können oder die Produktionsdaten aus dem den dritten Daten erzeugt beziehungsweise erstellt werden können. Dabei können die Produktionsdaten beispielsweise Daten über den Einsatz und den Gebrauch, aufgetretenen Probleme, Wartungsmaßnahmen und Betriebszustände der Produktionsmaschine beinhalten. Die Produktionsdaten können insbesondere während des Betriebs der Produktionsmaschine generiert und gespeichert werden.

In einem vierten Schritt des Verfahrens zum Verwalten werden Charakterdaten, welche wenigstens eine Eigenschaft des durch den Produktionsprozess hergestellten Bauelements charakterisieren, in einem dritten Dateicontainer, insbesondere verschlüsselt, gespeichert. Dazu empfängt die Recheneinrichtung oder eine weitere Recheneinrichtung beispielsweise vierte Daten, aus denen die Charakterdaten resultieren beziehungsweise abgeleitet werden können. Dies bedeutet analog zu den ersten Daten, dass die vierten Daten die Charakterdaten sein können oder die Charakterdaten aus den vierten Daten erzeugt beziehungsweise erstellt werden können. Dabei kann das Speichern wiederum insbesondere in der Speichereinrichtung oder einer weiteren Speichereinrichtung erfolgen, welche insbesondere beispielsweise einer der Recheneinrichtungen zugeordnet sein kann. Der Dateicontainer kann insbesondere wieder anlog zu dem ersten beziehungsweise zweiten Dateicontainer aufgebaut sein. Die Charakterdaten beschreiben dabei charakteristische Merkmale des Bauelements, wie beispielsweise den zur Herstellung des Bauelements zugrundeliegenden Produktionsprozess und/oder typische Herstellerangeben, insbesondere eines Bauelementfertiger, oder dergleichen.

In einem fünften Schritt des Verfahrens zum Verwalten wird eine Anfrage, beispielsweise eines Nutzers, welcher insbesondere ein Produktdesigner, ein Produktionsmaschinenhersteller, der Bauelementfertiger und/oder ein Anwender beziehungsweise Benutzer des Bauelements sein kann, empfangen. In einem sechsten Schritt wird zumindest ein Teil der gespeicherten Herstellungsdaten und/oder Reproduktionsdaten und/oder Produktionsdaten und/oder Charakterdaten in Abhängigkeit von der Anfrage, insbesondere entschlüsselt, bereitgestellt. Dabei ist beispielsweise die erste Recheneinrichtung für die Verwaltung und Freigabe der Anfragen zuständig und beispielsweise als Zentrale, mit der wenigstens einen am Verfahren beteiligten Produktionsmaschine verbunden beziehungsweise vernetzt, sodass die Recheneinrichtung die Lizensierungen der Reproduktionsdaten verwaltet kann und beispielsweise der Produktionsmaschine das Herstellen des Bauelements erlauben kann.

Insbesondere kann somit mittels einer Steganographie das optisch nicht sichtbare Merkmal in dem Produkt genutzt werden, um die Identität des Produkts feststellen zu können beziehungsweise verifizieren zu können. Insbesondere ist somit ein sogenanntes "Copyright" in dem Produkt versteckt angebracht.

Gemäß einer vorteilhaften Ausgestaltungsform wird mittels des Identifizierungssystems das Produkt während eines Herstellungsprozesses als Referenzprodukt erfasst und als Referenzproduktdatensatz in der Datenbank abgespeichert. Mit anderen Worten ist vorgesehen, dass bei der Herstellung des Produkts dieses Produkt erfasst wird und beispielsweise als digitaler Zwilling in der Datenbank hinterlegt wird. Mit anderen Worten wird davon ausgegangen, dass für das erfindungsgemäße Verfahren von dem Produkt ein digitaler Zwilling als Referenzprodukt verfügbar ist, das heißt eine digitale Kopie genau dieser Produktinstanz, deren Geometrie man mit dem vorliegenden Produkt abgleichen kann. Insbesondere ist ebenfalls möglich, dass in den meisten Anwendungsfällen eine digitale Kopie, zum Beispiel durch optisches 2D- oder 3D-Erfassen während des Produktionsprozesses erstellt werden kann. Insbesondere können frei sichtbare Flächen des digitalen Zwillings auf der Produktoberfläche entsprechend erfasst werden. Dadurch ist es ermöglicht, dass zusätzlich die Identität des Produkts bestimmt werden kann.

Es hat sich weiterhin als vorteilhaft erwiesen, wenn das optisch sichtbare Referenzmerkmal und das optisch nicht sichtbare Referenzmerkmal beim Erfassen des Referenzprodukts miterfasst werden und mit dem Referenzproduktdatensatz abgespeichert werden. Mit anderen Worten wird bereits beim Herstellungsprozess des Produkts das optisch sichtbare Referenzmerkmal und das optisch nicht sichtbare Referenzmerkmal mit dem Referenzprodukt erfasst und in der Datenbank abgespeichert. Insbesondere wird somit ein gemeinsamer Datensatz des Produkts abgespeichert. Dadurch kann einfach und dennoch zuverlässig auf das Produkt mit dem sichtbaren Referenzmerkmal und dem nicht sichtbaren Referenzmerkmal zurückgegriffen werden, um zuverlässig den ersten Vergleich und den zweiten Vergleich durchführen zu können, sodass eine verbesserte Identifikation des Produkts mittels des Identifizierungssystems ermöglicht ist.

Ferner hat es sich als vorteilhaft erwiesen, wenn das optisch nicht sichtbare Referenzmerkmal während des Herstellungsprozesses des Produkts als aktives optisches nicht sichtbares Merkmal auf dem Produkt, insbesondere auf einer Produktoberfläche des Produkts, erzeugt wird. Mit anderen Worten kann vorgesehen sein, dass aktiv und somit gewollt ein vorbestimmtes, nicht sichtbares Merkmal auf dem Produkt, beispielsweise auf einer Produktoberfläche, aufgebracht wird. Beispielsweise können hierzu unterschiedliche Farbcodes, welche für das menschliche Auge nicht sichtbar sind, auf das Produkt aufgebracht werden. Ferner können auch kleine Strichcodes auf das Produkt, insbesondere auf die Produktoberfläche, aufgebracht werden, um das optisch nicht sichtbare Merkmal zu erzeugen. Mit anderen Worten kann vorgesehen sein, dass ein aktives Einbringen eines "Fingerabdrucks", welcher auch als Fingerprint bezeichnet wird, an dem Produkt durchgeführt wird. Insbesondere kann dadurch die Fälschungssicherheit des Produkts verbessert werden und eine genaue Identifikation des Produkts durchgeführt werden.

Es hat sich weiterhin als vorteilhaft erwiesen, wenn ein QR-Code oder eine dreidimensionale Erhebung und/oder eine dreidimensionale Vertiefung als optisch nicht sichtbares Referenzmerkmal auf das Produkt aufgebracht werden. Insbesondere wird somit aktiv das optisch nicht sichtbare Referenzmerkmal auf dem Produkt erzeugt. Beispielsweise kann der QR-Code mittels einer Lasereinrichtung in die Produktoberfläche des Produkts eingebracht werden. Beispielsweise kann bei einem 3D-Druck eine dreidimensionale Erhebung und/oder eine dreidimensionale Vertiefung auf dem Produkt z. B. mit für das menschliche Auge nicht auflösbarer Dimension aufgebracht werden. Insbesondere kann vorgesehen sein, dass dreidimensionale Erhebungen zusammen mit dreidimensionalen Vertiefungen eine eindeutige Identifizierung des Produkts ermöglichen. Insbesondere sind der QR-Code und die dreidimensionalen Erhebungen und/oder Vertiefungen nicht sichtbar und somit fälschungssicher. Dadurch ist es ermöglicht, dass eine zuverlässige Bestimmung der Identität des Produkts ermöglicht ist.

In einer weiteren vorteilhaften Ausgestaltungsform wird als das optisch nicht sichtbare Referenzmerkmal ein bei der Herstellung des Produkts zufällig entstandenes, das Produkt charakterisierendes, Merkmal erfasst. Insbesondere bieten sich somit als optisch nicht sichtbares Referenzmerkmal Eigenschaften an, die zufällig während des Produktionsprozesses quasi intrinsisch entstanden sind. Hierzu können beispielsweise Fräß- und Schleifspuren herangezogen werden. Ferner können auch Läppspuren oder Legierungsgefüge dazu genutzt werden, um die Identifizierung mittels des optisch nicht sichtbaren Referenzmerkmals durchzuführen. Bei natürlichen Produkten, wie beispielsweise Lebensmitteln, können ferner individuelle Merkmale, die Eigenschaften eines Fingerabdrucks haben, genutzt werden. Beispielsweise kann bei Holz die Maserung des bearbeiteten Holzes als optisch nicht sichtbares Referenzmerkmal herangezogen werden. Ferner können eine Porenbildung in Keramikwerkstoffen dazu genutzt werden, um das optisch nicht sichtbare Referenzmerkmal erfassen zu können.

In einer weiteren vorteilhaften Ausgestaltungsform wird als das optisch nicht sichtbare Referenzmerkmal ein das Produkt charakterisierendes Werkstoffmerkmal des Produkts erfasst. Beispielsweise kann vorgesehen sein, dass bei natürlichen Produkten individuelle Merkmale, die Eigenschaften eines Fingerabdrucks haben, genutzt werden. Beispielsweise kann bei Holz die Maserung von dem bearbeiteten Holz, beziehungsweise kann bei Keramikwerkstoffen die Porenbildung, dazu genutzt werden, um das Produkt identifizieren zu können. Ferner kann sich ein Legierungsgefüge des Werkstoffs zur Identifikation des Produkts eignen. Dadurch ist es ermöglicht, dass mittels intrinsisch im Produkt entstandener Merkmale das Produkt zuverlässig identifiziert werden kann.

Ferner hat es sich als vorteilhaft erwiesen, wenn eine Teilfläche des Produkts, welche kleiner als eine Produktoberfläche ist, zum Erfassen des optisch nicht sichtbaren Merkmals mittels der Erfassungseinrichtung erfasst wird. Insbesondere wird das Produkt ganzheitlich erfasst, jedoch wird lediglich die Teilfläche zum Erfassen des nicht sichtbaren Merkmals und somit zur Identifikation des Produkts genutzt. Insbesondere kann beispielsweise mithilfe des digitalen Zwillings die frei sichtbare Fläche auf der Produktoberfläche ausgewählt werden, die zur Feststellung der Merkmale herangezogen wird. Um das Verfahren noch fälschungssicherer zu machen, kann die Fläche zufällig, in einem definierten Bereich des Produkts, gewählt werden. Die Position der Stelle wird zusammen mit der extrahierten Information und einem offensichtlichen individuellen Merkmal, wie beispielsweise die Seriennummer, in der Produktdatenbank abgespeichert. Das Produkt kann somit jederzeit auf seine Echtheit überprüft werden. Die Echtheit kann vom Hersteller mithilfe des oben beschriebenen Identifizierungssystems festgestellt werden. Es ist auch möglich, dass von einer dritten Person die Echtheit und die Identifizierung durchgeführt werden kann, ohne dass diese das genaue Verfahren kennt oder direkten Zugriff auf die Datenbank oder den digitalen Zwilling hat. Dazu kann die dritte Partei beispielsweise ein Kamerasystem nutzen, das von der Qualität dem entspricht, mit dem das Produkt, also das Referenzprodukt, ursprünglich erfasst wurde. Insbesondere durch die Erfassung der Teilfläche des Produkts bleibt es dem Benutzer des Identifizierungssystems verborgen, welche Stelle tatsächlich zur Merkmalsextraktion herangezogen wurde. Es wird insbesondere lediglich eine Teilfläche der Produktoberfläche erfasst, und in dieser Teilfläche befindet sich insbesondere das nicht sichtbare Merkmal. Somit ist es für den Benutzer nicht möglich zu wissen, an welcher Stelle das nicht sichtbare Merkmal ist, sodass das Produkt noch fälschungssicherer ist. Insbesondere ist dadurch verbessert die Identifizierung des Produkts ermöglicht.

Gemäß einer weiteren vorteilhaften Ausgestaltungsform werden das optisch sichtbare Referenzmerkmal und/oder das optisch nicht sichtbare Referenzmerkmal als Datensatz mittels einer Blockkette in der Datenbank gespeichert. Die Blockkette wird insbesondere auch als Blockchain bezeichnet. Insbesondere können damit die generierten Datensätze beziehungsweise der generierte Datensatz eindeutig codiert werden, beispielsweise durch das Bilden einer MD5-Summe, welche dann wiederum an die Blockkette angehängt werden kann. Damit kann zum einen die Authentizität des Datensatzes mithilfe der Blockkette überprüft werden, da die Originaldaten vom Hersteller nicht mehr verändert werden können, da ansonsten die MD5-Summen nicht mehr übereinstimmen würde. Umgekehrt kann durch die codierte Speicherung von den Betreibern der Blockkette nicht auf das Verfahren der Merkmalsextraktion geschlossen werden. Dadurch ist eine zuverlässige Identifizierung des Produkts ermöglicht.

Es hat sich weiterhin als vorteilhaft erwiesen, wenn das optisch sichtbare Merkmal mittels einer als Kamera ausgebildeten Erfassungseinrichtung oder mittels einer als Lasereinrichtung ausgebildeten Erfassungseinrichtung erfasst wird und/oder das optisch nicht sichtbare Merkmal mittels der als Kamera ausgebildeten Erfassungseinrichtung oder mittels der als Lasereinrichtung ausgebildeten Erfassungseinrichtung erfasst wird. Mit anderen Worten kann vorgesehen sein, dass sowohl mittels der Kamera als auch mittels der Lasereinrichtung das optisch sichtbare Merkmal sowie das optisch nicht sichtbare Merkmal erfasst werden können. Insbesondere ist es dadurch ermöglicht, dass auch für das menschliche Auge nicht sichtbare Merkmale extrahiert werden können. Insbesondere kann die Erfassungseinrichtung, sowohl die Kamera als auch die Lasereinrichtung, der Qualität entsprechen, mittels welcher das Produkt ursprünglich erfasst wurde, mit anderen Worten mittels welcher ursprünglich das optisch sichtbare Referenzmerkmal und das optisch nicht sichtbare Referenzmerkmal erfasst wurden. Insbesondere ist dadurch eine einfache und dennoch zuverlässige Erfassung des optisch sichtbaren Merkmals und des optisch nicht sichtbaren Merkmals ermöglicht.

Weiterhin vorteilhaft ist, wenn das optisch sichtbare Merkmal mittels der Erfassungseinrichtung von einem Nutzer erfasst wird und das erfasste optisch sichtbare Merkmal an die Datenbank übertragen wird, wobei von der Datenbank das erfasste optisch sichtbare Merkmal mit dem Referenzprodukt verglichen wird und zum Identifizieren des Produkts die Datenbank eine Aufforderung zum nochmaligen optischen Erfassen des Produkts in einer vorbestimmten Position an den Nutzer übermittelt, wobei in der vorbestimmten Position das optisch nicht sichtbare Merkmal mittels der Erfassungseinrichtung erfasst wird, und wobei das nochmalige optische Erfassen an die Datenbank übermittelt wird und das erfasste optisch nicht sichtbare Merkmal mit dem optisch nicht sichtbaren Referenzmerkmal verglichen wird und bei einer Übereinstimmung des optisch nicht sichtbaren Merkmals mit dem optisch nicht sichtbaren Referenzmerkmal das Produkt identifiziert wird. Dadurch ist es ermöglicht, dass dem Nutzer nicht angezeigt wird, wo sich das optisch nicht sichtbare Merkmal befindet. Insbesondere ist es weiterhin ermöglicht, dass auch aus einer Entfernung des Nutzers zur Datenbank dennoch eine Identifizierung ermöglicht ist. Somit kann hochfunktionell und dennoch zuverlässig und fälschungssicher das Produkt identifiziert werden.

Ein weiterer Aspekt der Erfindung betrifft ein Identifizierungssystem mit einer Erfassungseinrichtung und mit einer elektronischen Recheneinrichtung, wobei das Identifizierungssystem zum Durchführen des Verfahrens nach dem vorhergehenden Aspekt ausgebildet ist. Insbesondere wird das Verfahren mit dem Identifizierungssystem durchgeführt.

Das Identifizierungssystem kann insbesondere einen Computer, einen Mikrocontroller oder einen integrierten Schaltkreis umfassen. Alternativ kann die das Identifizierungssystem einen realen oder virtuellen Verbund von Computern umfassen (ein englischer Fachbegriff für einen realen Verbund ist "Cluster", ein englischer Fachbegriff für einen virtuellen Verbund ist "Cloud").

Ein unabhängiger Aspekt der Erfindung betrifft ein Verfahren zum Identifizieren eines Produkts, bei welchem ein optisch sichtbares Merkmal mittels einer Erfassungseinrichtung von einem Nutzer erfasst wird und das erfasste optisch sichtbare Merkmal an eine Datenbank übertragen wird, wobei von der Datenbank das erfasste optisch sichtbare Merkmal mit einem Referenzprodukt verglichen wird, und zum Identifizieren des Produkts die Datenbank eine Aufforderung zum nochmaligen optischen Erfassen des Produkts in einer vorbestimmten Position an den Nutzer übermittelt, wobei in der vorbestimmten Position ein optisch nicht sichtbares Merkmal mittels der Erfassungseinrichtung erfasst wird, und wobei das nochmalige optische Erfassen an die Datenbank übermittelt wird und das erfasste optisch nicht sichtbare Merkmal mit einem optisch nicht sichtbaren Referenzmerkmal verglichen wird und bei einer Übereinstimmung des erfassten optisch nicht sichtbaren Merkmals mit dem optisch nicht sichtbaren Referenzmerkmal das Produkt identifiziert wird.

Vorteilhafte Ausgestaltungsformen des Verfahrens sind als vorteilhafte Ausgestaltungsformen des Identifizierungssystems anzusehen. Das Identifizierungssystem weist dazu gegenständliche Merkmale auf, welche eine Durchführung des Verfahrens oder eine vorteilhafte Ausgestaltungsform davon ermöglichen.

Ferner betrifft die Erfindung ein Computerprogramm, welches direkt in einen Speicher einer elektronischen Recheneinrichtung einer Analysevorrichtung ladbar ist, mit Programm-Mitteln, um die Schritte des Verfahrens nach einem dem vorhergehenden Aspekt auszuführen, wenn das Programm in der elektronischen Recheneinrichtung der Analysevorrichtung ausgeführt wird.

Ein nochmals weiterer Aspekt der Erfindung betrifft einen elektronisch lesbarer Datenträger mit darauf gespeicherten elektronisch lesbaren Steuerinformationen, welche zumindest ein Computerprogramm nach dem vorhergehenden Aspekt umfassen und derart ausgestaltet sind, dass sie bei Verwendung des Datenträgers in einer elektronischen Recheneinrichtung einer Analysevorrichtung ein Verfahren nach einem dem vorhergehenden Aspekt veranlassen.

Weitere Merkmale und Vorteile sind der folgenden Beschreibung anhand der beigefügten Figuren zu entnehmen. In den Figuren bezeichnen gleiche Bezugszeichen gleiche Merkmale und Funktionen. Die Ausführungsbeispiele dienen lediglich der Erläuterung der Erfindung und sollen diese nicht beschränken.

Dabei zeigen:
- FIG 1: ein schematisches Blockschaltbild einer Ausführungsform eines Identifizierungssystems; und
- FIG 2: eine weitere schematische Ansicht einer Ausführungsform des Identifizierungssystems.

In den Figuren sind gleiche oder funktionsgleiche Elemente mit den gleichen Bezugszeichen versehen.

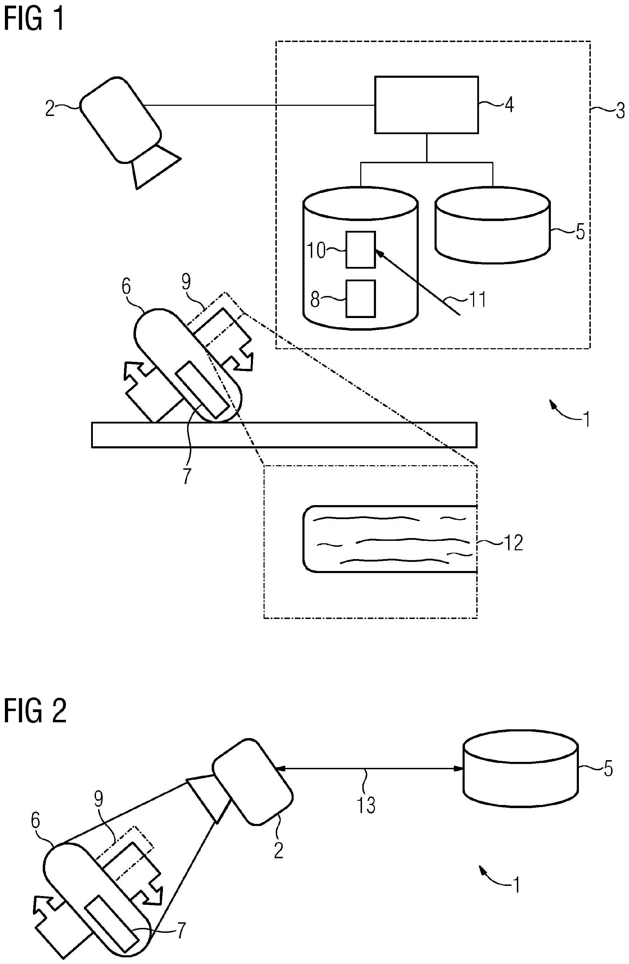

FIG 1 zeigt in einer schematischen Ansicht eine Ausführungsform eines Identifizierungssystems 1. Das Identifizierungssystem 1 weist eine Erfassungseinrichtung 2 sowie eine elektronische Recheneinrichtung 3 auf. Im vorliegenden Ausführungsbeispiel weist die elektronische Recheneinrichtung 3 insbesondere eine Steuerungseinheit 4 auf, welche auch als Computer Process Unit (CPU) bezeichnet werden kann. Insbesondere kann die Steuerungseinheit 4 beispielsweise elektronische Schaltkreise, beispielsweise integrierte Schaltkreise, aufweisen, mittels welchen Berechnungen durchgeführt werden können. Insbesondere kann mittels der Steuerungseinheit 4 ein Computerprogrammprodukt, zum Durchführen des erfindungsgemäßen Verfahrens, ausgeführt werden. Ferner weist im vorliegenden Ausführungsbeispiel die elektronische Recheneinrichtung 3 eine Datenbank 5 auf.

In diesem Ausführungsbeispiel umfasst das Identifizierungssystem einen Prozessor und eine Speichereinheit. Die elektronische Recheneinrichtung 3 kann Hardware-Elemente oder Software-Elemente aufweisen, beispielsweise einen Mikroprozessor oder ein sogenanntes FPGA (englisches Akronym für "Field Programmable Gate Array"). Eine Speichereinheit kann als nicht dauerhafte Arbeitsspeicher (Random Access Memory, kurz RAM) oder als dauerhafter Massenspeicher (Festplatte, USB-Stick, SD-Karte, Solid State Disk) realisiert sein.

Bei einem Verfahren zum Bestimmen einer Identität eines Produkts 6 mittels des Identifizierungssystems 1 wird mittels der Erfassungseinrichtung 2 des Identifizierungssystems 1 ein optisch sichtbares Merkmal 7 des Produkts 6 erfasst und das erfasste optisch sichtbare Merkmal 7 mit einem in der Datenbank 5 des Identifizierungssystems 1 abgespeicherten optisch sichtbaren Referenzmerkmal 8 des Produkts 6 in einem ersten Vergleich mittels der elektronischen Recheneinrichtung 3 des Identifizierungssystems 1 verglichen und in Abhängigkeit des ersten Vergleichs wird die Identität des Produkts 6 bestimmt wird.

Es ist vorgesehen, dass mittels der Erfassungseinrichtung 2 ein weiteres optisches nicht sichtbares Merkmal 9 des Produkts 6 erfasst wird und mit einem in der Datenbank 5 des Identifizierungssystems 1 abgespeicherten optisch nicht sichtbaren Referenzmerkmal 10 des Produkts 6 in einem zweiten Vergleich verglichen wird und in Abhängigkeit des ersten Vergleichs und des zweiten Vergleichs die Identität des Produkts 6 mittels der elektronischen Recheneinrichtung 3 bestimmt wird.

Insbesondere kann vorgesehen sein, dass mittels des Identifizierungssystems 1 das Produkt 6 während eines Herstellungsprozesses als Referenzprodukts erfasst wird und als Referenzproduktdatensatz 11 in der Datenbank 5 abgespeichert wird.

Ferner kann vorgesehen sein, dass das optisch sichtbare Referenzmerkmal 8 und das optisch nicht sichtbare Referenzmerkmal 10 beim Erfassen des Referenzprodukts miterfasst werden und mit dem Referenzproduktdatensatz 11 abgespeichert werden. Insbesondere wird der Datensatz in der Datenbank 5 abgespeichert.

Ferner kann vorgesehen sein, dass das optisch nicht sichtbare Referenzmerkmal 10 während des Herstellungsprozesses des Produkts 6 als aktives optisches nicht sichtbares Referenzmerkmal 10 auf dem Produkt 6, insbesondere auf einer Produktoberfläche des Produkts 6, erzeugt wird. Insbesondere kann hierzu vorgesehen sein, dass ein QR-Code oder eine dreidimensionale Erhebung und/oder eine dreidimensionale Vertiefung als optisch nicht sichtbares Referenzmerkmal 10 auf das Produkt 6 aufgebracht wird.

Ferner kann vorgesehen sein, dass als optisch nicht sichtbares Referenzmerkmal 10 ein bei der Herstellung des Produkts 6 zufällig entstandenes, das Produkt 6 charakterisierendes, Merkmal erfasst wird. Insbesondere kann hierzu beispielsweise als optisch nicht sichtbares Referenzmerkmal 10 ein das Produkt 6 charakterisierendes Werkstoffmerkmal des Produkts 6 erfasst werden.

Des Weiteren ist insbesondere vorgesehen, dass das optisch sichtbare Referenzmerkmal 8 und/oder das optisch nicht sichtbare Referenzmerkmal 10 als Datensatz mittels einer Blockkette in der Datenbank 5 gespeichert werden. Des Weiteren kann vorgesehen sein, dass das optisch sichtbare Merkmal 7 mittels einer als Kamera ausgebildeten Erfassungseinrichtung 2 oder mittels einer als Lasereinrichtung ausgebildeten Erfassungseinrichtung 2 erfasst wird und/oder das optisch nicht sichtbare Merkmal 9 mittels der als Kamera ausgebildeten Erfassungseinrichtung 2 oder mittels der als Lasereinrichtung ausgebildeten Erfassungseinrichtung 2 erfasst wird.

Mit anderen Worten ist insbesondere vorgesehen, dass durch das vorgestellte Verfahren solche optisch nicht sichtbaren Merkmale 9 zum Nachweis bestimmter Rechte oder Eigenschaften herangezogen werden, die unveränderlich mit dem Produkt 6 verbunden sind und nicht, beziehungsweise nur unter relativ großem Aufwand, kopiert werden können. Dafür bieten sich beispielsweise Eigenschaften an, die zufällig während des Herstellungsprozesses quasi intrinsisch entstanden sind, wie beispielsweise Fräßspuren 12, welche in der FIG 1 als nicht optisch sichtbares Merkmal 9 dargestellt sind. Alternativ können beispielsweise auch Schleifspuren oder Läppspuren oder Legierungsgefüge als entsprechendes nicht sichtbares optisches Merkmal 9 herangezogen werden. Diese Spuren können alternativ oder ergänzend als optisch nicht sichtbares Merkmal erfasst werden. Bei natürlichen Produkten 6 verwendet man individuelle Merkmale, die Eigenschaften eines "Fingerabdrucks" des Produkts 6 haben, zum Beispiel die Maserung von bearbeitetem Holz oder Porenbildung in Keramikwerkstoffen.

Insbesondere wird vorgesehen, dass von dem Produkt 6 ein digitaler Zwilling verfügbar ist, welcher im vorliegenden Beispiel als Referenzprodukt bezeichnet ist. Das heißt, es liegt eine digitale Kopie genau dieser Produktinstanz vor, deren Geometrie mit dem vorliegenden Produkt 6 abgeglichen werden kann. Alternativ kann vorgesehen sein, dass eine digitale Kopie, zum Beispiel durch optische 2D- oder 3D-Erfassungen während des Herstellungsprozesses erstellt werden.

Mithilfe des Referenzprodukts wird eine freie sichtbare Fläche auf der Produktoberfläche ausgewählt, die zur Feststellung der Merkmale 7, 9 herangezogen wird. Um die Methode noch fälschungssicherer zu machen, kann die Fläche zufällig, insbesondere in einem definierten Bereich des Produkts 6, gewählt werden. Die Position der Stelle wird zusammen mit der extrahierten Information und einem offensichtlichen individuellen Merkmal, mit anderen Worten dem optisch sichtbaren Merkmal 7, welches beispielsweise eine Seriennummer sein kann, in der Datenbank 5 abgespeichert. Die Datenbank 5 kann dabei vom Hersteller bereitgestellt sein, sie kann aber auch von einer vertrauenswürdigen dritten Instanz betrieben werden. Eine Möglichkeit der Datenbank 5, außerhalb des Zugriffs des Herstellers abzulegen, wäre beispielsweise in Form einer Blockkette ermöglicht. Dabei würden die generierten Datensätze eindeutig codiert, beispielsweise bilden diese eine MD5-Summe, und an eine Blockkette angehängt werden. Damit kann zum einen die Authentizität und damit die Identität des Datensatzes mithilfe der Blockkette überprüft werden, da die Originaldaten vom Hersteller nicht mehr verändert werden können. Umgekehrt kann durch die codierte Speicherung von den Betreibern der Blockkette nicht auf das Verfahren der Merkmalsextraktion geschlossen werden.

Das so bereitgestellte Produkt 6 kann nun jederzeit auf seine Echtheit und damit auf die Identität überprüft werden. Die Echtheit kann vom Hersteller mithilfe des Identifizierungssystems 1 festgestellt werden. Sie kann aber auch von einer dritten Person überprüft werden, zum Beispiel von einem Käufer oder einem Servicepersonal, ohne dass dieser das genaue Verfahren kennt oder direkten Zugriff auf die Datenbank 5 oder das Referenzprodukt beziehungsweise dem Referenzproduktdatensatz 11 hat.

FIG 2 zeigt in einer schematischen Ansicht eine weitere Ausführungsform des Identifizierungssystems 1. Insbesondere zeigt die FIG 2, dass eine Teilfläche des Produkts 6, welche kleiner als eine Produktoberfläche ist, zum Erfassen des optisch nicht sichtbaren Merkmals 9 mittels der Erfassungseinrichtung 2 erfasst wird.

Des Weiteren zeigt FIG 2 ein Verfahren zum Identifizieren des Produkts 6, bei welchem das optisch sichtbare Merkmal 7 mittels der Erfassungseinrichtung 2 von einem Nutzer erfasst wird und das erfasste optisch sichtbare Merkmal 7 an die Datenbank 5 übertragen wird, wobei von der Datenbank 5 das erfasste optisch sichtbare Merkmal 7 mit einem Referenzprodukt verglichen wird und zum Identifizieren des Produkts 6 die Datenbank 5 eine Aufforderung zum nochmaligen optischen Erfassen des Produkts 6 in einer vorbestimmten Position an den Nutzer übermittelt, wobei in der vorbestimmten Position das optisch nicht sichtbare Merkmal 9 mittels der Erfassungseinrichtung 2 erfasst wird und wobei das nochmalige optische Erfassen an die Datenbank 5 übermittelt wird und das erfasste optisch nicht sichtbare Merkmal 9 mit dem optisch nicht sichtbaren Referenzmerkmal 10 verglichen wird und bei einer Übereinstimmung des optisch nicht sichtbaren Merkmals 9 mit dem optisch nicht sichtbaren Referenzmerkmal 10 das Produkt 6 identifiziert wird.

Insbesondere ist es dadurch auch einer dritten Person ermöglicht, ohne das genaue Verfahren zu kennen, das Produkt 6 zu identifizieren. Insbesondere wird hierzu auf das Referenzprodukt auf der Datenbank 5, also dem Referenzproduktdatensatz 11, zurückgegriffen. Dazu braucht die dritte Partei insbesondere die Erfassungseinrichtung 2, welche von der Qualität her der Erfassungseinrichtung 2 entspricht, mit der das Produkt 6 ursprünglich erfasst wurde, mit anderen Worten mit welcher das Referenzprodukt erfasst wurde. Beispielsweise kann für einfach festzustellende optisch nicht sichtbare Merkmale 9, wie zum Beispiel Fräßspuren 12 oder Holzmaserung, eine einfache Kamera, wie sie beispielsweise am mobilen Endgerät als Mobiltelefon verbaut ist, genutzt werden.

Insbesondere kann vorgesehen sein, dass zunächst der Benutzer das optisch sichtbare Merkmal 7, beispielsweise die Seriennummer, des Produkts 6, beispielsweise durch Einscannen eines sichtbaren QR-Codes, an die Datenbank 5 übermittelt. Mithilfe des optisch sichtbaren Merkmals 7 werden der digitale Zwilling, mit anderen Worten das Referenzprodukt, und die damit abgespeicherten Daten identifiziert. Dem Benutzer kann daraus eine Ansicht generiert und übermittelt werden, aus der sich ergibt, welche Stellen beziehungsweise aus welcher Position des Produkts 6 er das Produkt 6 mit der Erfassungseinrichtung 2 aufnehmen muss. Damit der Benutzer daraus nicht die exakte Stelle ableiten kann, die für die Merkmalsextraktion verwendet wird, gibt es verschiedene Möglichkeiten. Beispielsweise kann die Ansicht nicht identisch mit der tatsächlichen Stelle der Merkmalsextraktion sein, aber diese zumindest enthalten. Alternativ oder ergänzend kann vorgesehen sein, dass der Benutzer aufgefordert wird, mehrere Aufnahmen von verschiedenen Stellen des Produkts 6 zu machen.

Damit bleibt vor dem Benutzer verborgen, welche Stellen tatsächlich zur Merkmalsextraktion herangezogen wurden. Es kann jedoch aufgrund dieser Informationen eine Aufnahme erstellt werden, die das optisch nicht sichtbare Merkmal 9 enthält. Die Aufnahme kann dann vom mobilen Endgerät aus beispielsweise über Internet 13 an die Datenbank 5 geschickt werden. Nach einer geeigneten Vorverarbeitung, beispielsweise einem Clippen, einer Entzerrung, oder einer Farbkorrektur kann die Aufnahme dahingehend überprüft werden, ob sie das optisch nicht sichtbare Merkmal 9 enthält. Ist dies der Fall, so wird dem Benutzer mitgeteilt, dass es sich um ein gültiges Produkt 6 handelt. Wurde zusätzlich die Datenbank 5 codiert in einer Blockchain gespeichert, so kann diese zusätzlich konsultiert werden, um eine Manipulation der Daten durch den Hersteller auszuschließen.

Mit anderen Worten ist erfindungsgemäß vorgesehen, dass vor Endkunden verborgene Merkmale, also die nicht sichtbaren optischen Merkmale 9 des Produkts 6, mit sichtbaren Merkmalen 7 verbunden werden. Dadurch können sowohl der Hersteller als auch der Endkunde die Authentizität des Produkts 6 nachweisen. Für den Endkunden ist keine Fälschung des Nachweises mehr möglich. Wird die Datenbank 5 außerhalb des Zugriffs des Herstellers verwahrt, beispielsweise zusätzlich codiert in der Blockkette, so kann dieser ebenfalls im Nachhinein den Nachweis nicht mehr fälschen.

Ein hierin beschriebenes Verfahren kann auch in Form eines Computerprogrammprodukts vorliegen, das das Verfahren auf einer Steuereinheit der elektronischen Recheneinrichtung 3 implementiert, wenn es auf der Steuereinheit ausgeführt wird. Ebenso kann ein elektronisch lesbarer Datenträger (nicht dargestellt) mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in einer Steuereinheit einer MR-Anlage ein beschriebenes Verfahren durchführen.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

### Bezugszeichenliste

- 1: Identifizierungssystem
- 2: Erfassungseinrichtung
- 3: elektronische Recheneinrichtung
- 4: Steuerungseinheit
- 5: Datenbank
- 6: Produkt
- 7: optisch sichtbares Merkmal
- 8: optisch sichtbares Referenzmerkmal
- 9: optisch nicht sichtbares Merkmal
- 10: optisch nicht sichtbares Referenzmerkmal
- 11: Referenzproduktdatensatz
- 12: Fräßspuren
- 13: Internet

## Patentansprüche

1. Verfahren zum Bestimmen einer Identität eines Produkts (6) mittels eines Identifizierungssystems (1), bei welchem mittels einer Erfassungseinrichtung (2) des Identifizierungssystems (1) ein optisch sichtbares Merkmal (7) des Produkts (6) erfasst wird und das erfasste optisch sichtbare Merkmal (7) mit einem in einer Datenbank (5) des Identifizierungssystems (1) abgespeicherten optisch sichtbaren Referenzmerkmal (8) des Produkts (6) in einem ersten Vergleich mittels einer elektronischen Recheneinrichtung (3) des Identifizierungssystems (1) verglichen wird und in Abhängigkeit des ersten Vergleichs die Identität des Produkts (6) bestimmt wird, **dadurch gekennzeichnet, dass**
mittels der Erfassungseinrichtung (2) ein weiteres optisch nicht sichtbares Merkmal (9) des Produkts (6) erfasst wird und mit einem in der Datenbank (5) abgespeicherten optisch nicht sichtbaren Referenzmerkmal (10) des Produkts (6) in einem zweiten Vergleich verglichen wird und in Abhängigkeit des ersten Vergleichs und des zweiten Vergleichs die Identität des Produkts (6) mittels der elektronischen Recheneinrichtung (3) bestimmt wird.

2. Verfahren nach Anspruch 1, **dadurch gekennzeichnet, dass** mittels des Identifizierungssystems (1) das Produkt (6) während eines Herstellungsprozesses als Referenzprodukt erfasst wird und als entsprechender Referenzdatensatz (11) in der Datenbank (5) abgespeichert wird.

3. Verfahren nach Anspruch 2, **dadurch gekennzeichnet, dass** das optisch sichtbare Referenzmerkmal (8) und das optisch nicht sichtbare Referenzmerkmal (10) beim Erfassen des Referenzprodukts miterfasst werden und mit dem Referenzproduktdatensatz in der Datenbank (5) abgespeichert werden.

4. Verfahren nach einem der vorhergehenden Ansprüche, **dadurch gekennzeichnet, dass** das optisch nicht sichtbare Referenzmerkmal (10) während des Herstellungsprozesses des Produkts (6) als aktives optisches nicht sichtbares Referenzmerkmal (10) auf dem Produkt (6), insbesondere auf einer Produktoberfläche des Produkts (6), erzeugt wird.

5. Verfahren nach Anspruch 4, **dadurch gekennzeichnet, dass** ein QR-Code oder eine dreidimensionale Erhebung und/oder eine dreidimensionale Vertiefung als optisch nicht sichtbares Referenzmerkmal (10) auf das Produkt (6) aufgebracht wird.

6. Verfahren nach einem der Ansprüche 1 bis 3, **dadurch gekennzeichnet, dass** als das optisch nicht sichtbare Referenzmerkmal (10) ein bei der Herstellung des Produkts (6) zufällig entstandenes, das Produkt (6) charakterisierendes, Merkmal erfasst wird.

7. Verfahren nach einem der Ansprüche 1 bis 3, **dadurch gekennzeichnet, dass** als das optisch nicht sichtbare Referenzmerkmal (10) ein das Produkt (6) charakterisierendes Werkstoffmerkmal des Produkts (6) erfasst wird.

8. Verfahren nach einem der vorhergehenden Ansprüche, **dadurch gekennzeichnet, dass** eine Teilfläche des Produkts (6), welche kleiner als eine gesamte Oberfläche des Produkts (6) ist, zum Erfassen des optisch nicht sichtbaren Merkmals (9) mittels der Erfassungseinrichtung (2) erfasst wird.

9. Verfahren nach einem der vorhergehenden Ansprüche, **dadurch gekennzeichnet, dass**
das optische sichtbare Referenzmerkmal (8) und/oder das optisch nicht sichtbare Referenzmerkmal (10) als Datensatz mittels einer Blockkette in der Datenbank (5) gespeichert werden.

10. Verfahren nach einem der vorhergehenden Ansprüche, **dadurch gekennzeichnet, dass**
das optisch sichtbare Merkmal (7) mittels einer als Kamera ausgebildeten Erfassungseinrichtung (2) oder mittels einer als Lasereinrichtung ausgebildeten Erfassungseinrichtung (2) erfasst wird und/oder das optisch nicht sichtbare Merkmal (9) mittels der als Kamera ausgebildeten Erfassungseinrichtung (2) oder mittels der als Lasereinrichtung ausgebildeten Erfassungseinrichtung (2) erfasst wird.

11. Verfahren nach einem der vorhergehenden Ansprüche, **dadurch gekennzeichnet, dass**
das optisch sichtbare Merkmal (7) mittels der Erfassungseinrichtung (2) von einem Nutzer erfasst wird und das erfasste optisch sichtbare Merkmal (7) an die Datenbank (5) übertragen wird, wobei von der Datenbank (5) das erfasste optisch sichtbare Merkmal (7) mit dem Referenzprodukt verglichen wird und zum Identifizieren des Produkts (6) die Datenbank (5) eine Aufforderung zum nochmaligen optischen Erfassen des Produkts (6) in einer vorbestimmten Position an den Nutzer übermittelt, wobei in der vorbestimmten Position das optisch nicht sichtbare Merkmal (9) mittels der Erfassungseinrichtung (2) erfasst wird, und wobei das nochmalige optische Erfassen an die Datenbank (5) übermittelt wird und das erfasste optisch nicht sichtbare Merkmal (9) mit dem optisch nicht sichtbaren Referenzmerkmal (10) verglichen wird und bei einer Übereinstimmung des optisch nicht sichtbaren Merkmals (9) mit dem optisch nicht sichtbaren Referenzmerkmal (10) das Produkt (6) identifiziert wird.

12. Identifizierungssystem (1) mit einer Erfassungseinrichtung (2) und mit einer elektronischen Recheneinrichtung (3), wobei das Identifizierungssystem (1) zum Durchführen des Verfahrens nach einem der Ansprüche 1 bis 11 ausgebildet ist.

13. Computerprogramm, welches direkt in einen Speicher einer elektronischen Recheneinrichtung (3) einer Analysevorrichtung ladbar ist, mit Programm-Mitteln, um die Schritte des Verfahrens nach einem der Ansprüche 1 bis 11 auszuführen, wenn das Programm in der elektronischen Recheneinrichtung (3) der Analysevorrichtung ausgeführt wird.

14. Elektronisch lesbarer Datenträger mit darauf gespeicherten elektronisch lesbaren Steuerinformationen, welche zumindest ein Computerprogramm nach Anspruch 12 umfassen und derart ausgestaltet sind, dass sie bei Verwendung des Datenträgers in einer elektronischen Recheneinrichtung (3) einer Analysevorrichtung ein Verfahren nach einem der Ansprüche 1 bis 11 veranlassen.
